# EUROPEAN PATENT SPECIFICATION

(11) **EP 1 268 500 B1**
(45) Date of publication and mention of the grant of the patent: **01.10.2003**
(21) Application number: 01936087.4
(22) Date of filing: 19.03.2001
(51) Int. Cl.: C07F 15/04, C08F 4/80

(54) **COMPLEX POLYMERIZATION CATALYSTS FOR THE HOMOPOLYMERIZATION OF ETHYLENE AND FOR THE COPOLYMERIZATION OF ETHYLENE**
POLYMERISATIONSKATALYSATORKOMPLEXE FÜR DIE HOMO- UND DIE COPOLYMERISATION VON ETHYLEN
CATALYSEURS DE POLYMERISATION COMPLEXES POUR HOMOPOLYMERISATION DE L'ETHYLENE ET COPOLYMERISATION DE L'ETHYLENE

(30) Priority: 31.03.2000 IT MI20000677; 31.03.2000 IT MI20000678; 31.03.2000 IT MI20000679
(43) Date of publication of application: 02.01.2003
(73) Proprietor: Polimeri Europa S.p.A., 72100 Brindisi (IT)
(72) Inventor: ROMANO, Anna Maria, I-28100 Novara (IT); GRANDE, Manuela, I-13100 Vercelli (IT); SANTI, Roberto, I-28100 Novara (IT); PROTO, Antonio, I-28100 Novara (IT); SOMMAZZI, Anna, I-16030 Santa Margherita Ligure (IT)
(74) Representative: De Gregori, Antonella
(86) International application number: EP0103023
(87) International publication number: WO01074831

(56) References cited:
- EP-A- 0 137 389
- HENNIG, HORST ET AL: "Coordination tendency of acidic amino groups. V. Constitution of some cobalt(II) chelates of 3-phenyl-5-pyrid-2-ylpyrazole" Z. ANORG. ALLG. CHEM., vol. 371, no. 3-4, 1969, pages 212-219, XP002147955
- CHEMICAL ABSTRACTS, vol. 75, no. 6, 9 August 1971 (1971-08-09) Columbus, Ohio, US; abstract no. 44358, HENNIG, HORST ET AL: "Coordination tendencies of acidic amino groups. VIII. Complexing behavior of 3-methyl-5-pyridyl-2-pyrazole" XP002147957 & Z. CHEM. (1971), 11(1), 24-5,
- CHEMICAL ABSTRACTS, vol. 129, no. 4, 27 July 1998 (1998-07-27) Columbus, Ohio, US; abstract no. 47647, WARD, MICHAEL D. ET AL: "[Pd(HL)Cl2] and [PdL2], where HL is 2-(3-pyrazolyl)pyridine" XP002147958 & ACTA CRYSTALLOGR., SECT. C: CRYST. STRUCT. COMMUN. (1998), C54(5), 609-612,
- CHEMICAL ABSTRACTS, vol. 130, no. 14, 5 April 1999 (1999-04-05) Columbus, Ohio, US; abstract no. 190913, DONG, GORDON ET AL: "The syntheses, spectra and structures of five-coordinate cobalt(II) complexes of pyrazolyl-containing ligands" XP002147959 & INORG. CHIM. ACTA (1999), 284(2), 266-272,
- SATAKE, AKIHARU ET AL: "Synthesis and structural analysis of palladium(II) pyridinylpyrazole complexes by 1H-, 13C-, 15N-NMR and X-ray diffraction. Comparison of binuclear methylpalladium, chloromethylpalladium, and dichloropalladium complexes by 15N-NMR" J. ORGANOMET. CHEM. (2000), 595(2), 208-214, vol. 595, no. 2, 2000, pages 208-214, XP002147956
- DATABASE CHEMABS [Online] CHEMICAL ABSTRACTS SERVICE, COLUMBUS, OHIO, US; CHADGHAN, ARAFA ET AL: "Cobalt(II) complexes with pyrazole-derived ligands: crystal structure of {bis[3-phenyl-5-(2-pyridyl)pyrazole]aquach lorocobalt(II )} chloride monohydrate" retrieved from STN Database accession no. 133:129196 XP002147960 & POLYHEDRON (2000), 19(7), 855-862,
- SHEU ET AL: "Synthesis, properties and molecular structures of iron(III), cobalt(II), nickel(II), copper(II), copper(I) and zinc(II) complexes with N,N-bis(pyrazol-1-ylmethyl)benzylamine" JOURNAL OF THE CHEMICAL SOCIETY, DALTON TRANSACTIONS,CHEMICAL SOCIETY. LETCHWORTH,GB, no. 21, 1995, pages 3503-3510, XP002147951 ISSN: 1472-7773
- BLONK ET AL: "Transition-metal coordination compounds of a novel aniline-based pyrazole derivative. X-ray crystal structures of [N,N-bis(3,5-dimethylpyrazol-1-ylmethyl)am inobenzene]dichlorocobalt( II) and -dibromocopper(II)" JOURNAL OF THE CHEMICAL SOCIETY, DALTON TRANSACTIONS,CHEMICAL SOCIETY. LETCHWORTH,GB, no. 8, 1985, pages 1699-1705, XP002147952 ISSN: 1472-7773
- VISWANATHAN ET AL: "Synthesis, structure, spectra and redox chemistry of iron(III) complexes of tridentate pyridyl and benzimidazolyl ligands" JOURNAL OF THE CHEMICAL SOCIETY, DALTON TRANSACTIONS,CHEMICAL SOCIETY. LETCHWORTH,GB, no. 12, 1996, pages 2519-2525, XP002147962 ISSN: 1472-7773
- VISWANATHAN ET AL: "Analogs of the iron-binding site in catechol 1,2-dioxygenase: iron(III) complexes of benzimidazole- and pyridine-containing tridentate ligands" JOURNAL OF THE CHEMICAL SOCIETY, DALTON TRANSACTIONS,CHEMICAL SOCIETY. LETCHWORTH,GB, no. 8, 1995, pages 1259-1266, XP002147963 ISSN: 1472-7773
- CHEMICAL ABSTRACTS, vol. 120, no. 12, 21 March 1994 (1994-03-21) Columbus, Ohio, US; abstract no. 152174, BATRA, GITA ET AL: "Synthesis and characterization of iron(III) complexes with tridentate ligands containing N2O/N2S donor sites" XP002147969 & POLYHEDRON (1993), 12(21), 2635-43 ,
- CHEMICAL ABSTRACTS, vol. 132, no. 26, 26 June 2000 (2000-06-26) Columbus, Ohio, US; abstract no. 356018, PANDIYAN, THANGARASU ET AL: "Compounds of Ni(II) with coenzyme M reductase. Study of synthesis, spectra, and redox activities" XP002147966 & REV. SOC. QUIM. MEX. (1999), 43(6), 183-187 ,
- CHEMICAL ABSTRACTS, vol. 127, no. 10, 8 September 1997 (1997-09-08) Columbus, Ohio, US; abstract no. 144259, PANDIYAN, T. ET AL: "Structure, spectra and redox studies of nickel(II) bis(benzimidazole-2-ylmethyl)amines with coenzyme M reductase" XP002147967 & POLYHEDRON (1997), 16(16), 2819-2826 ,
- CHEMICAL ABSTRACTS, vol. 122, no. 18, 1 May 1995 (1995-05-01) Columbus, Ohio, US; abstract no. 229216, BATRA, GITA ET AL: "1H and 13C magnetic resonance investigation of nickel(II) complexes of bis-benzimidazolyl ligands" XP002147968 & POLYHEDRON (1994), 13(23), 3219-28 ,

## Description

The present invention relates to complex polymerization catalysts, their preparation and their use in the homopolymerization of ethylene and in the copolymerization of ethylene with another unsaturated monomer in the production of high molecular weight polymers.

Ethylene, and alpha-olefins in general, are traditionally polymerized by means of Ziegler type catalysts generally consisting of a hydride, or organometallic compound, of elements of groups I to III of the periodic table and a compound of a transition metal belonging to groups IV to VI of the periodic table.

Non-traditional catalysts based on various nickel complexes, capable of polymerizing olefins, described for example in DE-3,228,865 and EP-137,389, are also described in patent literature.

Patent application EP 0 393 751 describes a group of catalysts consisting of nickel complexes with phosphorate derivatives bound to a polystyrene carrier.

New catalysts have now been found, based on a metal of group VIII complexed with suitable ligands, particularly active in the homopolymerization of ethylene and in its copolymerization with another unsaturated monomer of the vinylic and acrylic type.

The complex catalysts, object of the present invention, for the homopolymerization of ethylene and for the copolymerization of ethylene with another unsaturated monomer are characterized in that they have one of the following general formulae: 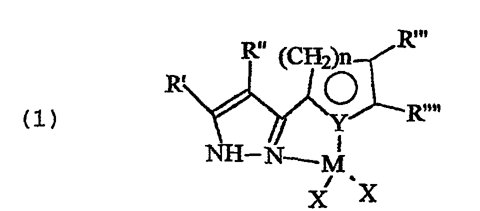 wherein
M is Ni,
X is a halogen, preferably selected from Br and Cl,
Y is selected from N, O and S
R' and R'', the same or different, are selected from hydrogen, linear or branched alkyl, cycloalkyl and aryl groups, said groups, containing from 1 to 10 carbon atoms, being optionally halogenated, preferably with fluorine,
R''', R'''', the same or different, are selected from hydrogen and aryl groups or are bound together to form a condensed benzene ring, said aryl groups or said condensed benzene ring being optionally substituted with linear or branched alkyl groups containing from 1 to 10 carbon atoms,
n is an integer having the value of 1 or 2;

When R', R'', R''' and/or R'''' are aryl groups, they are preferably selected from phenyl, biphenyl, naphthyl and anthracenyl.
The process for the preparation of the catalyst described above by formula (1) is characterized by the use of a halide of an anhydrous Nickel (II), diluting said halide in a suitable distilled solvent and adding a ligand, having the general formula: 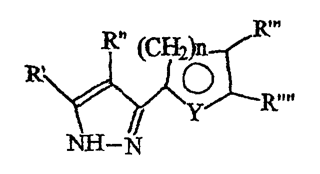 wherein Y, R', R'', R''' and R'''' have the same values specified for the general formula (1) of the catalyst described above,
in an equivalent quantity with respect to the anhydrous metal, and finally isolating the Nickel complex by filtration or by evaporation of the solvent and subsequent drying.

The catalysts of the present invention are active in the homopolymerization of ethylene and in the copolymerization of ethylene with another unsaturated monomer.

The expression "another unsaturated monomer", as used in the present invention, refers to another alpha-olefin or an unsaturated monomer of the acrylic or vinylic type.

Examples of these unsaturated monomers copolymerizable with ethylene are: propylene, alkyl esters (C₁-C₁₂) of acrylic or methacrylic acid, such as methyl and ethyl acrylate and methacrylate, vinyl acetate, acrylonitrile and styrene.

The polymerization or copolymerization of ethylene can be carried out with the normal polymerization techniques: however in the preferred embodiment the technique in suspension of an organic-liquid diluent, normally selected from aliphatic, cycloaliphatic and aromatic hydrocarbons, such as for example hexane and toluene, is adopted.

Ethylene, or a mixture of ethylene and another unsaturated monomer, is conveniently fed to said liquid reaction medium, operating at a temperature ranging from 10 to 100°C, preferably from room temperature (20-25°C) to 60°C, and at a pressure ranging from atmospheric pressure to 100 bars.

Under these conditions, polymers and copolymers of ethylene are obtained in the solid state, with a molecular weight depending on the polymerization conditions, useful for practical purposes.

Some experimental examples are provided for a better illustration of the present invention.

### EXAMPLES 1-16

The examples for the preparation of the catalyst with formula (1) are carried out according to the following general synthesis procedure.

The desired quantity of an anhydrous nickel (II) halide (NiCl₂, NiBr₂·DME or NiI₂) is charged into a test-tube under argon, it is diluted with a suitable distilled, anhydrous solvent and, finally, the desired ligand is added in an equivalent quantity with respect to the metal. The complex is isolated either by filtration or by evaporation of the solvent and subsequent drying. It is characterized by means of ¹H NMR and mass spectrometry.

### EXAMPLE 1

### a) Synthesis of 1-(2-pyridine)-4,4,4-trifluoromethylbutane-1,3-dione.

25 ml of 1-acetyl-pyridine (0.22 moles) are added dropwise, in about 4 hours, to a suspension of 53 ml of ethyl trifluoroacetate (0.44 moles) and 17.6 g of NaH 60% (0.44 moles) in 350 ml of anhydrous ethyl ether. A further 300 ml of anhydrous ethyl ether are added to keep the reaction mass fluid. The mixture is then refluxed for 9 hours and, after this period, 40 ml of ethanol are slowly added dropwise to destroy the excess NaH and the mixture is filtered on filter paper. The reaction mixture is poured into a 1 liter beaker containing 400 g of ice and 100 ml of glacial AcOH and the mixture is maintained under stirring for the whole night. The two phases are subsequently separated and the aqueous phase is washed with ethyl ether (3x200 ml), whereas the ether phase, after being washed with NaHCO₃ until neutrality and again with water, is dried on Na₂SO₄ and finally evaporated from the solvent. 32.5 g of product are obtained, which, upon NMR analysis, proves to have a 93% purity (yield: 68%).
¹H NMR (in CDCl₃, ppm): 9.85 (1H, m), 8.31 (1H, m), 7.91 (1H, m), 7.60 (1H, m), 2.15 (2H, s).

### b) Synthesis of 3-trifluoromethyl-5-pyridine-pyrazole (I)

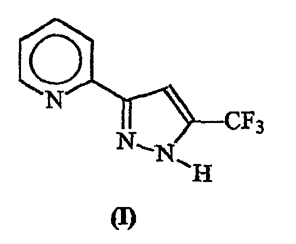

43 ml of hydrazine hydrate (0.84 moles) diluted with 20 ml of water with exothermy are slowly added dropwise to a solution of 32.5 g of 1-(2-pyridine)-4,4,4-tri-fluoromethyl-butane-1,3-dione (0.139 moles) dissolved in 80 ml of ethanol. The mixture is refluxed for 1 hour and, after cooling, is extracted with ethyl ether (100 ml for 10 times). The ether phase, washed with water (150 ml for 3 times) to eliminate the excess hydrazine, dried on Na₂SO₄ and finally evaporated from the solvent, provides 26 g of raw material, which is crystallized with 200 ml of warm toluene. The white crystals are filtered, washed with petroleum ether and dried with a mechanical pump. 11.6 g of a light pink solid are thus obtained.
¹H NMR (light pink solid, in (CD₃)₂CO, ppm): 8.5 (1H, dd), 7.95 (1H, dd), 7.80 (1H, m), 7.30 (1H m), 3.45 (2H, s), IR (in nujol) : 3360 cm⁻¹ M.S. = 159 m/z m.p. = 139-40°C.

### EXAMPLE 2

### Synthesis of [3-trifluoromethyl-5-pyridine-pyrazole]NiBr₂ (II):

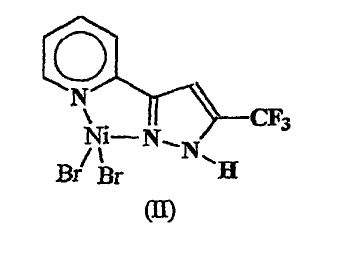

0.616 g of anhydrous NiBr₂·DME (0.002 moles) suspended in 50 ml of anhydrous DME are charged under argon into a 150 ml test-tube. 0.428 g of 3-trifluoromethyl-5-pyridine-pyrazole (0.002 moles) are added. There is an immediate colour-change from beige to green. After a night, the solvent is evaporated, the green residue is washed with methylene chloride and dried with a pump, obtaining 0.160 g of green complex (yield: 18%).
¹H NMR (in DMSO-d₆, ppm): 8.5 (1H, m), 7.84 (2H, m), 7.26 (1H, m), 7.19 (1H, s).

### EXAMPLE 3

23 mg of the complex (II) (MW = 430; 5.3·10⁻⁵moles) are charged under argon into a 100 ml four-necked flask. The complex is dissolved in 60 ml of toluene. 1 ml of triisobutylaluminum 1 M (TIBAL; 20 eq) is added. The green solution put under ethylene becomes golden yellow. It is kept at room temperature for 2 hours and is heated to 45°C for 2 hours. After quenching the reaction with ethanol and H₂SO₄ 10%, the product is extracted with methylene chloride, and, after evaporation of the solvent, provides 0.3 g of solid.
Activity = 5600 g PE/Ni mole

### EXAMPLE 4

10 mg of the complex (II) in 30 ml of toluene (MW = 430; 2.32·10⁻⁵moles) are charged under argon into a 100 ml three-necked flask. 6 ml of TEA 1 M (500 eq) are added. The green solution put under ethylene becomes golden yellow. It is kept at room temperature for 2 hours and is heated to 65°C for 2 hours. After quenching the reaction with ethanol and H₂SO₄ 10%, the product is extracted with methylene chloride, and, after evaporation of the solvent, provides 0.05 g of solid.
Activity = 4300 g PE/Ni mole

### EXAMPLE 5

21 mg of (II) (MW = 430; 4.87·10⁻⁵moles) are charged under argon into a 100 ml four-necked flask equipped with a cooler. The complex is suspended in 60 ml of CH₂Cl₂ (green solution). 1.7 ml of MAO 1.57 M (55 eq) are added. The green solution put under ethylene becomes golden yellow. It is kept at room temperature for 2 hours and is heated to 65°C for 2 hours. After quenching the reaction with ethanol and H₂SO₄ 10%, the product is extracted with methylene chloride, and, after evaporation of the solvent, provides. 0.41 g of solid.
Activity = 8400 g PE/Ni mole

### EXAMPLE 6

21 mg of (II) (MW = 430; 4.8·10⁻⁵moles) are charged under argon into a 100 ml four-necked flask equipped with a cooler. The complex is dissolved in 60 ml of toluene. 2 ml of MAO 1.45 M (65 eq) are added. The green solution put under ethylene becomes golden yellow. It is kept at room temperature for 2 hours and is heated to 65°C for 2 hours. After quenching the reaction with ethanol and H₂SO₄ 10%, the product is extracted with methylene chloride, and, after evaporation of the solvent, provides 1.06 g of solid.
Activity = 21700 g PE/Ni mole

### EXAMPLE 7

7.3 mg of (II) (MW = 430; 1.711·10⁻⁵moles) are charged under argon into a 250 ml four-necked flask equipped with a cooler. The complex is dissolved in 60 ml of toluene at 0°C under ethylene. 1 ml of MAO 1.57 M (100 eq) is added. The solution is kept at 0°C for 2 hours and at room temperature for 12 hours. After quenching the reaction with methanol and HCl 10%, the product is extracted with methylene chloride, and, after evaporation of the solvent, provides 0.671 g of polymer.
Activity = 39200 g PE/Ni mole
Tm = 130.9°C (determined by means of DSC-heating rate = 10°C/min).
N = 4 branchings x 1000 C atoms (determined by means of ¹H and ¹³C NMR spectroscopy).

### EXAMPLE 8

### a) Synthesis of 1-(2-benzofuranyl)-4,4,4-trifluoromethyl-butane-1,3-dione

35.7 ml of 2-acetyl benzofuran (0.30 moles) are added dropwise, in about 4 hours, to a suspension of 35.7 ml of ethyl trifluoroacetate (0.60 moles) and 24.0 g of NaH 60% (0.60 moles) in 500 ml of anhydrous ethyl ether. A further 500 ml of anhydrous ethyl ether are added to keep the reaction mass fluid. The mixture is refluxed for 1 hour and, after this period, 50 ml of ethanol are slowly added dropwise to destroy the excess NaH. The reaction mixture is poured into a 1 liter beaker containing 500 g of ice and water and HCl is added until pH = 5. The two phases are subsequently separated and the aqueous phase is washed with ethyl ether (3x200 ml), whereas the ether phase, after being washed with NaHCO₃ until neutrality, is washed again with water and dried on Na₂SO₄ and finally evaporated from the solvent. 26.4 g of product are obtained, which, from NMR proves to correspond to a mixture of keto-enolic tautomers (yield: 42%).
¹H NMR (in CD₃COCD₃, ppm): 7.66 (2H, m), 7.55 (2H, m), 6.20 (1H, s), 3.20 (2H, s).

### b) Synthesis of 3-trifluoromethyl-5-benzofuranyl pyrazole (III)

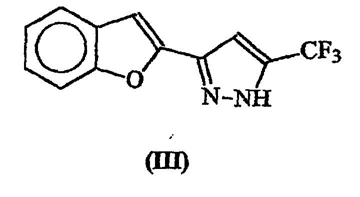

20 g of hydrazine hydrate (0.4 moles) in water, are slowly added dropwise to a solution containing 26 ml of 1-(2-benzofuranyl)-4,4,4-trifluoromethylbutane-1,3-dione (0.128 moles) in 500 ml of ethyl ether, with a slight development of heat. At the end of the addition, the mixture is refluxed for 1 hour. The two phases are subsequently separated and the aqueous phase is washed with ethyl ether (6x200 ml), whereas the organic phase, after being washed with NaHCO₃ until neutrality and again with water, is dried on Na₂SO₄ and finally evaporated from the solvent. 16.0 g of solid are obtained, which, from mass spectrometry and GC-mass analysis appears to be the desired product.
¹H NMR (in CD₃COCD₃, ppm): 7.46 (2H, q), 7.25 (2H, q), 6.92 (1H, s), 6.32 (1H, s). mass: 252 (molecular ion).

### EXAMPLE 9

### Synthesis of [3-trifluoromethyl-benzofuranyl pyrazole]NiBr₂ (IV)

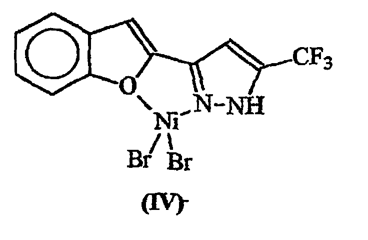

0.828 g of 3-trifluoromethyl-benzofuranyl pyrazole (3.4 mmoles) are added to a purple solution containing 1.05 g of NiBr₂·DME (3.4 mmoles) in 100 ml of distilled and anhydrous THF, with the formation of a yellow precipitate. The solid is filtered, washed with heptane and dried. 1.403 g of complex are obtained (yield:88%). Mass: 471 (molecular ion).

### EXAMPLE 10

3.5 mg of (IV) (MW = 470; 0.74·10⁻⁶moles) are placed under argon in a 100 ml four-necked flask. The complex is dissolved in 30 ml of toluene and 5 ml of MAO 1.57 M (1050 eq) are added. After treating the reaction with methanol and HCl 10%, the mixture is extracted with methylene chloride, and, after evaporation of the solvent, provides 0.380 g of polymer.
Activity = 51028 g PE/Ni mole
Tm = 85.2°C (determined by means of DSC-heating rate = 10°C/min).
N = 31 branchings x 1000 C atoms (determined by means of ¹H and ¹³C NMR spectroscopy).

### EXAMPLE 11

3.5 mg of (IV) (MW = 470; 7.4·10⁻⁶moles) are placed under argon in a 250 ml four-necked flask. The complex is dissolved in 120 ml of toluene (yellow solution). 5 ml of MAO 1.57 M (1000 eq) are added. The green solution put under ethylene darkens. It is kept at room temperature for 2 hours and is heated to 45°C for 2 hours. After treating the reaction with methanol and HCl 10%, the mixture is extracted with methylene chloride, and, after evaporation of the solvent, provides 0.298 g of polymer.
Activity = 40017 g PE/Ni mole

### EXAMPLE 12

5 mg of (IV) (MW = 470; 1.06·10⁻⁵moles) are placed under argon in a 100 ml four-necked flask. The complex is dissolved in 30 ml of toluene (yellow solution) and 0.65 ml of MAO 1.57 M (100 eq) are added. The yellow solution put under ethylene becomes golden. It is heated to 45°C for 2 hours and is kept at room temperature for 2 hours. After treating the reaction with methanol and HCl 10%, the mixture is extracted with methylene chloride, and, after evaporation of the solvent, provides 0.36 g of polymer.
Activity = 33840 g PE/Ni mole

### EXAMPLE 13

### a) Synthesis of 1-(2-thiophenyl)-4,4,4-trifluoromethyl-butane-1,3-dione

38.5 ml of 2-acetylthiophene (0.30 moles) are added dropwise, in about 4 hours, to a suspension of 35.7 ml of ethyl trifluoroacetate (0.60 moles) and 24.0 g of NaH 60% (0.60 moles) in 500 ml of anhydrous ethyl ether. A further 500 ml of anhydrous ethyl ether are added to keep the reaction mass fluid. The mixture is refluxed for 1 hour and, after this period, 50 ml of ethanol are slowly added dropwise to destroy the excess NaH. The reaction mixture is poured into a 1 liter beaker containing 500 g of ice and water and HCl is added until pH = 5. The two phases are subsequently separated and the aqueous phase is washed with ethyl ether (3x200 ml), whereas the ether phase, after being washed with NaHCO₃ until neutrality, is washed again with water and dried on Na₂SO₄ and finally evaporated from the solvent. 60 g of raw product are obtained, which is purified by reaction with 40 g of Cu(OCOCH₃)₂ (0.198 moles) in 350 ml of hot water and 100 ml of methanol. A green precipitate is immediately formed, which is filtered, washed with petroleum ether and dried with a pump. The copper β-diketonate complex (57 g) is treated with 500 ml of H₂SO₄ 10% and, after stirring for an hour, extracted with ethyl ether (200 ml x 3 times) and dried on Na₂SO₄. After evaporation of the solvent, 47 g of clean product are obtained (yield: 71%).
¹H NMR (in CDCl₃, ppm): 8.25 (1H, m), 8.10 (1H, m), 8.01 (1H, m), 7.32 (1H, m), 6.86 (1H, s), 6.48 (1H, s), 3.42 (1H, s).

### b) Synthesis of 3-trifluoro methyl-5-thiophenylpyrazole (V)

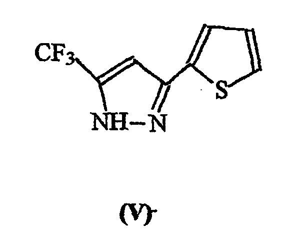

60 ml of hydrazine (0.6 moles) are slowly added dropwise to a solution containing 45 ml of 1-(2-thiophenyl)-4,4,4-trifluoromethyl-butane-1,3-dione (0.02 moles) in 500 ml of ethanol, with a slight development of heat. At the end of the addition, the mixture is refluxed for 1 hour. The two phases are subsequently separated and the aqueous phase is washed with methylene chloride (6x200 ml), whereas the organic phase, after being washed with an aqueous saturated solution of NaHCO₃ until neutrality, is washed again with water and dried on Na₂SO₄ and finally evaporated from the solvent. 29.25 g of product are obtained (yield: 78%).
¹H NMR (in CDCl₃, ppm): 13.8 (1H, broad, s), 7.25 (2H, m), 7.06 (1H, dd), 6.70 (1H, s),;
m.p. = 121°C

### EXAMPLE 14

### Synthesis of [3-trifluoromethyl-thiophenyl pyrazole] NiCl₂ (VI)

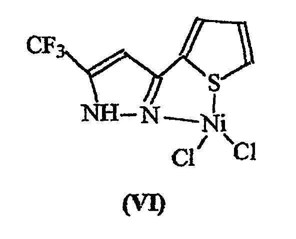

1.151 g of 3-trifluoromethyl-thiophenyl pyrazole (5 mmoles) are added under argon to a solution containing 0.651 g of anhydrous NiCl₂ (5 mmoles) in 100 ml of distilled and anhydrous DME. The solvent is evaporated, methylene chloride is added and the yellow solid is filtered and dried. 0.603 g of complex are obtained (yield: 23%)
mass = 347 (molecular ion)

### EXAMPLE 15

10.8 mg of (VI) (MW = 347; 3.11·10⁻⁵moles) are charged under argon into a 100 ml four-necked flask. The complex is dissolved in 30 ml of toluene and 1 ml of MAO 1.57 M (50 eq) are added. The green solution put under ethylene becomes golden yellow. It is heated to 65°C for 2 hours and is kept at room temperature for 2 hours. After quenching the reaction with ethanol and H₂SO₄ 10%, the product is extracted with methylene chloride, and, after evaporation of the solvent, provides 0.170 g of brown wax.
Activity = 5500 g PE/Ni mole

### EXAMPLE 16

10 mg of (VI) (MW = 347; 2.9·10⁻⁵moles) are charged under argon into a 100 ml four-necked flask. The complex is dissolved in 30 ml of toluene. 10 ml of MAO 1.57 M (550 eq) are added. The green solution put under ethylene becomes golden yellow. It is kept at room temperature for 2 hours and is heated to 65°C for 2 hours. After quenching the reaction with ethanol and H₂SO₄ 10%, the product is extracted with methylene chloride, and, after evaporation of the solvent, provides 0.28 g of waxy solid.
Activity = 9700 g PE/Ni mole
Tm = 112.5°C (determined by means of DSC-heating rate = 10°C/min).
N = 12 branchings x 1000 C atoms (determined by means of ¹H and ¹³C NMR spectroscopy).

## Claims

1. Complex catalysts for the homopolymerization of ethylene and for the copolymerization of ethylene with another unsaturated monomer **characterized in that** it have the following general formula: 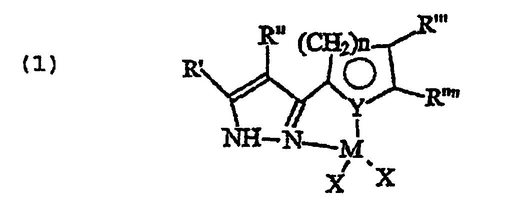 wherein:
M is nickel,
X is a halogen,
Y is selected from N, O and S
R' and R'', the same or different, are selected from hydrogen, linear or branched alkyl, cycloalkyl and aryl groups, said groups, containing from 1 to 10 carbon atoms, being optionally halogenated,
R''', R'''', the same or different, are selected from hydrogen and aryl groups or are bound together to form a condensed benzene ring, said aryl groups or said condensed benzene ring being optionally substituted with linear or branched alkyl groups containing from 1 to 10 carbon atoms,
n is an integer having the value of 1 or 2.

2. The catalyst according to claim 1, wherein the aryl group is selected from phenyl, biphenyl, naphthyl or anthracenyl.

3. The catalyst according to claim 1, where, in the formula (1), the halogen is bromine or chlorine.

4. The catalyst according to claim 1, where, in the formula (1), the linear or branched alkyl group is' halogenated with fluorine.

5. The catalyst according to claim 1 having the following formula:

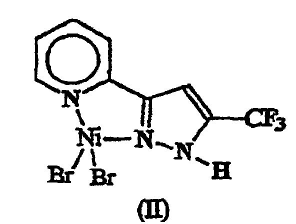

6. The catalyst according to claim 1 having the fol lowing formula:

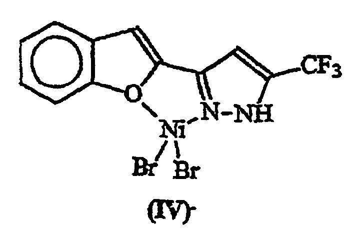

7. The catalyst according to claim 1 having the following formula:

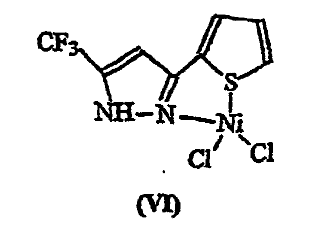

8. A process for the preparation of the catalyst according to at least one of the claims from 1 to 7, **characterized by** using a halide of an anhydrous nickel (II), diluting said halide in a suitable distilled solvent and adding a ligand having the general formula 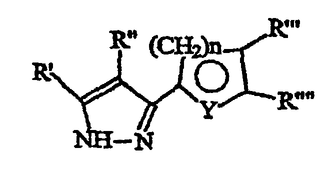 wherein
Y is selected from N, O and S
R' and R'', the same or different, are selected from hydrogen, linear or branched alkyl, cycloalkyl and aryl groups, said groups, containing from 1 to 10 carbon atoms, being optionally halogenated,
R''', R'''', the same or different, are selected from hydrogen and aryl groups or are bound together to form a condensed benzene ring, said aryl groups or said condensed benzene ring being optionally substituted with linear or branched alkyl groups containing from 1 to 10 carbon atoms,
n is an integer having the value of 1 or 2,
in an equivalent quantity with respect to the anhydrous metal, finally isolating the complex of nickel by filtration or by evaporation of the solvent and subsequent drying.

9. A process for the polymerization of ethylene or the copolymerization of ethylene with another unsaturated monomer, **characterized in that** the catalyst according to at least one of claims 1 to 7 is used as polymerization catalyst.

10. The process according to claim 9, wherein the polymerization is carried out in an inert organic diluent, at a temperature ranging from 10 to 100°C and at a pressure ranging from atmospheric pressure to 100 bars.

11. The process according to claim 9, **characterized in that** the unsaturated monomer is an alpha-olefin or a monomer of the acrylic or vinylic type.

## Patentansprüche

1. Katalysatorkomplexe für die Homopolymerisation von Ethyten und für die Copolymerisation von Ethylen mit einem weiteren ungesättigten Monomer, **dadurch gekennzeichnet, dass** sie die folgende allgemeine Formel aufweisen: 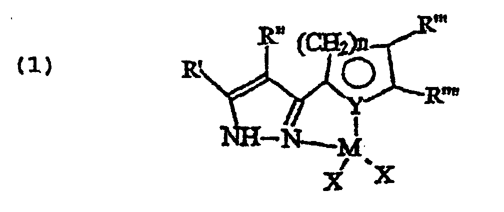 worin:
M Nickel ist,
X ein Halogen ist,
Y aus N, O und S ausgewählt ist,
R' und R", gleich oder verschieden, aus Wasserstoff, unverzweigten oder verzweigten Alkyl-, Cycloalkyl- und Arylgruppen ausgewählt sind, wobei die Gruppen, die 1 bis 10 Kohlenstoffatome enthalten, gegebenenfalls halogeniert sind,
R'", R"", gleich oder verschieden, aus Wasserstoff und Arylgruppen ausgewählt sind oder miteinander verbunden sind, um einen kondensierten Benzolring zu bilden, wobei die Arylgruppen oder der kondensierte Benzolring gegebenenfalls mit unverzweigten oder verzweigten Alkylgruppen mit 1 bis 10 Kohlenstoffatomen substituiert sind,
n eine ganze Zahl mit einem Wert von 1 oder 2 ist.

2. Der Katalysator gemäß Anspruch 1, worin die Arylgruppe aus Phenyl, Biphenyl, Naphthyl oder Anthracenyl ausgewählt ist.

3. Der Katalysator gemäß Anspruch 1, worin in der Formel (1) das Halogen Brom oder Chlor ist.

4. Der Katalysator gemäß Anspruch 1, worin in der Formel (1) die unverzweigte oder verzweigte Alkylgruppe mit Fluor halogeniert ist.

5. Der Katalysator gemäß Anspruch 1, der die folgende Formel aufweist:

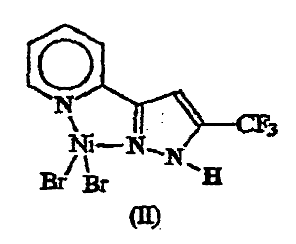

6. Der Katalysator gemäß Anspruch 1, der die folgende Formel aufweist:

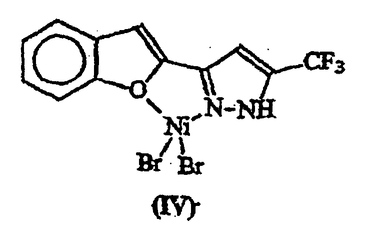

7. Der Katalysator gemäß Anspruch 1, der die folgende Formel aufweist:

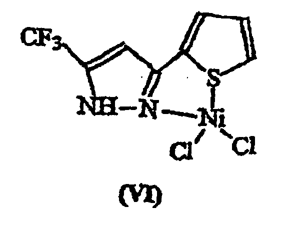

8. Ein Verfahren zur Herstellung eines Katalysators gemäß einem der Ansprüche 1 bis 7, **dadurch gekennzeichnet, dass** ein Halogenid von einem wasserfreien Nickel (II) verwendet wird, das Halogenid in einem geeigneten destillierten Lösungsmittel verdünnt wird und ein Ligand, der die folgende allgemeine Formel aufweist: 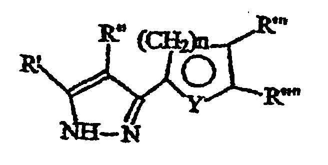 worin:
Y aus N, O und S ausgewählt ist,
R' und R", gleich oder verschieden, aus Wasserstoff, unverzweigten oder verzweigten Alkyl-, Cycloalkyl- und Arylgruppen ausgewählt sind, wobei die Gruppen, die 1 bis 10 Kohlenstoffatome enthalten, gegebenenfalls halogeniert sind,
R'", R"", gleich oder verschieden, aus Wasserstoff und Arylgruppen ausgewählt sind oder miteinander verbunden sind, um einen kondensierten Benzolring zu bilden, wobei die Arylgruppen oder der kondensierte Benzolring gegebenenfalls mit unverzweigten oder verzweigten Alkylgruppen mit 1 bis 10 Kohlenstoffatomen substituiert sind,
n eine ganze Zahl mit einem Wert von 1 oder 2 ist,
in einer äquivalenten Menge, bezogen auf das wasserfreie Metall, zugegeben wird, schließlich der Nickelkomplex durch Filtration oder durch Verdampfung des Lösungsmittels isoliert wird und anschließend getrocknet wird.

9. Ein Verfahren für die Polymerisation von Ethylen oder die Copolymerisation von Ethylen mit einem weiteren ungesättigten Monomer, **dadurch gekennzeichnet, dass** der Katalysator gemäß einem der Ansprüche 1 bis 7 als Polymerisationskatalysator eingesetzt wird.

10. Das Verfahren gemäß Anspruch 9, worin die Polymerisation in einem inerten organischen Verdünnungsmittel durchgeführt wird, bei einer Temperatur im Bereich von 10 bis 100°C und bei einem Druck im Bereich von atmosphärischem Druck bis 100 bar.

11. Das Verfahren gemäß Anspruch 9, **dadurch gekennzeichnet, dass** das ungesättigte Monomer ein alpha-Olefin oder ein Monomer der Acryl- oder Vinylart ist.

## Revendications

1. Catalyseurs complexes pour l'homopolymérisation de l'éthylène et pour la copolymérisation de l'éthylène avec un autre monomère insaturé **caractérisé en ce qu'**ils ont la formule générale suivante : 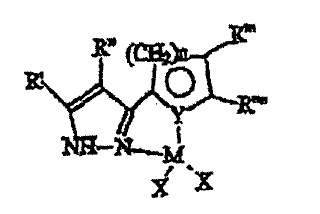 dans laquelle :
M est le nickel,
X est un halogène,
Y est choisi parmi N, O et S
R' et R'', identiques ou différents, sont choisis parmi l'hydrogène, un alkyle linéaire ou ramifié, les groupes cycloalkyle et aryle, lesdits groupes contenant de 1 à 10 atomes de carbone, étant éventuellement halogénés,
R''' et R'''', identiques ou différents, sont choisis parmi l'hydrogène et les groupes aryle, ou sont liés ensemble pour former un cycle benzène condensé, lesdits groupes aryle ou ledit cycle benzène condensé étant éventuellement substitués avec des groupes alkyle linéaires ou ramifiés contenant de 1 à 10 atomes de carbone,
n est un nombre entier ayant la valeur de 1 ou 2.

2. Catalyseur selon la revendication 1, dans lequel le groupe aryle est choisi parmi le phényle, le biphényle, le naphtyle ou l'anthracényle.

3. Catalyseur selon la revendication 1, où, dans la formule (1), l'halogène est le brome ou le chlore.

4. Catalyseur selon la revendication 1, où, dans la formule (1), le groupe alkyle linéaire ou ramifié est halogéné avec du fluor.

5. Catalyseur selon la revendication 1, ayant la formule suivante :

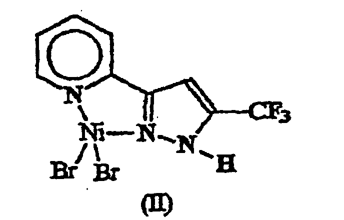

6. Catalyseur selon la revendication 1, ayant la formule suivante :

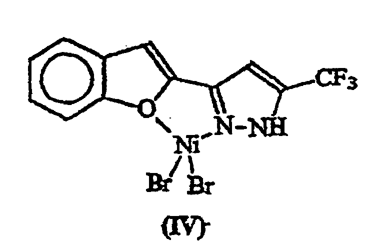

7. Catalyseur selon la revendication 1, ayant la formule suivante :

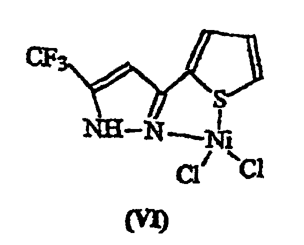

8. Procédé pour la préparation du catalyseur selon au moins l'une des revendications 1 à 7, **caractérisé par** l'utilisation d'un halogénure d'un nickel anhydre (II), la dilution dudit halogénure dans un solvant distillé adapté et l'addition d'un ligand ayant la formule générale 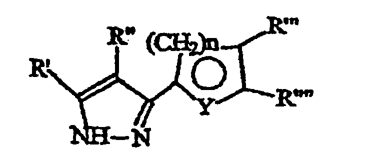 dans laquelle
Y est choisi parmi N, O et S
R' et R'', identiques ou différents, sont choisis parmi l'hydrogène,, un alkyle linéaire ou ramifié, les groupes cycloalkyle et aryle, lesdits groupes contenant de 1 à 10 atomes de carbone, étant éventuellement halogénés,
R''' et R'''', identiques ou différents, sont choisis parmi l'hydrogène et les groupes aryle, ou sont liés ensemble pour former un cycle benzène condensé, lesdits groupes aryle ou ledit cycle benzène condensé étant éventuellement substitués avec des groupes alkyle linéaires ou ramifiés contenant de 1 à 10 atomes de carbone,
n est un nombre entier ayant la valeur de 1 ou 2,
en une quantité équivalente par rapport au métal anhydre, l'isolement final du complexe de nickel par filtration ou par évaporation du solvant et séchage subséquent.

9. Procédé pour la polymérisation de l'éthylène ou la copolymérisation de l'éthylène avec un autre monomère insaturé, **caractérisé en ce que** le catalyseur selon au moins une des revendications 1 à 7 est utilisé comme catalyseur de polymérisation.

10. Procédé selon la revendication 9, dans lequel la polymérisation est effectuée dans un diluant organique inerte, à une température dans la plage allant de 10 à 100°C et à une pression dans la plage allant de la pression atmosphérique à 100 bars.

11. Procédé selon la revendication 9, **caractérisé en ce que** le monomère insaturé est une alpha-oléfine ou un monomère du type acrylique ou vinylique.
